# FASCICULE DE BREVET EUROPEEN

(11) **EP 3 794 237 B1**
(45) Date de publication et mention de la délivrance du brevet: **17.05.2023**
(21) Numéro de dépôt: 19790608.4
(22) Date de dépôt: 19.06.2019
(51) Int. Cl.: F04D 25/08, F04D 29/32, H02K 9/06, H02K 7/14, F01P 5/02

(54) **DISPOSITIF DE VENTILATION POUR VÉHICULE AUTOMOBILE**
LÜFTERVORRICHTUNG FÜR EIN KRAFTFAHRZEUG
FAN DEVICE FOR A MOTOR VEHICLE

(30) Priorité: 21.06.2018 FR 1855532
(43) Date de publication de la demande: 24.03.2021
(73) Titulaire: Valeo Systemes Thermiques-THS, 78322 Le Mesnil Saint Denis Cedex (FR)
(72) Inventeur: AZZOUZ, Kamel, 78322 Le Mesnil Saint Denis Cedex (FR); MAMMERI, Amrid, 78322 Le Mesnil Saint Denis Cedex (FR); BAKIR, Farid, 78322 Le Mesnil Saint Denis Cedex (FR); KHELLADI, Sofiane, 78322 Le Mesnil Saint Denis Cedex (FR); LEBERT, Cedric, 78322 Le Mesnil Saint Denis Cedex (FR)
(74) Mandataire: Valeo Systèmes Thermiques
(86) Numéro de dépôt international: PCT/FR2019/051497
(87) Numéro de publication internationale: WO 2019/243739

(56) Documents cités:
- DE-A1-102013 215 808
- JP-A- H10 191 593
- US-A1- 2007 152 519
- US-A1- 2016 290 346

## Description

La présente invention se rapporte au domaine des dispositifs de ventilation pour véhicule automobile, et plus particulièrement des dispositifs de ventilation électriques.

Il est notamment connu dans ce domaine de proposer une hélice comprenant un moyeu central autour duquel sont régulièrement disposées des pales et à l'intérieur duquel est ménagé un moteur électrique pour l'entraînement en rotation de l'hélice. Le pilotage du moteur électrique permet la mise en oeuvre de l'hélice du ventilateur pour générer un flux d'air principal depuis l'extérieur du véhicule vers le compartiment moteur notamment, pouvant être utilisé pour refroidir des composants du véhicule automobile susceptibles de dégager de la chaleur.

Il est connu d'utiliser le flux d'air pour participer au refroidissement du moteur électrique afin d'éviter une surchauffe des composants électroniques de ce moteur, surchauffe qui pourrait réduire les performances du moteur électrique ou conduire à une défaillance de ce dernier.

Le document US 2008/193275 propose une hélice de ventilateur équipée d'un moteur électrique dont on veut assurer un refroidissement. L'hélice comprend un bol formant moyeu central et des pales régulièrement réparties autour du bol. Le moteur électrique est logé en partie dans le bol de l'hélice de sorte à délimiter ensemble un passage d'air entre le contour extérieur du moteur et le bol de l'hélice. En fonctionnement, le mouvement de rotation du moteur électrique génère un mouvement de flux d'air secondaire traversant le moteur électrique depuis l'arrière, c'est-à-dire à l'opposé du bol de l'hélice, par le biais d'orifices. Le flux d'air secondaire est ainsi utilisé pour dissiper la chaleur dégagée par le moteur électrique et par ses composants électriques. Le flux d'air secondaire est ensuite dirigé vers une face intérieure du bol comprenant des nervures guidant le flux d'air radialement, vers le passage formé entre le contour extérieur du moteur et le bol de l'hélice. Le flux d'air est alors évacué en dehors de l'hélice.

Toutefois, cette solution présente en particulier l'inconvénient de dissiper le flux d'air secondaire en dehors de l'hélice vers l'arrière de celui-ci, c'est-à-dire du côté où se trouve le moteur. Le flux d'air secondaire redirigé vers le moteur est un flux d'air réchauffé pour avoir servi à refroidir le moteur électrique de sorte que ce flux d'air ne permet pas de dissiper de façon optimale la chaleur dégagée par le moteur électrique et par ses composants électriques. Le document DE102013215808 A1 décrit un autre dispositif de ventilation selon l'art antérieur.

La présente invention a pour but de pallier à au moins l'un des inconvénients précités et de proposer un dispositif de ventilation motorisé pour véhicule automobile permettant d'améliorer les performances de refroidissement d'un moteur électrique.

A cet effet, l'invention a pour objet un dispositif de ventilation motorisé pour véhicule automobile selon la revendication 1.

Ainsi, il est possible de dissiper un flux d'air parcourant le moteur électrique depuis un côté de l'hélice vers l'autre côté de l'hélice. Il est alors possible d'optimiser l'alimentation en flux d'air froid du moteur électrique logé dans l'hélice pour refroidir ce moteur électrique et ces composants électroniques.

On comprendra qu'en fonctionnement le mouvement de rotation des pales de l'hélice créé une différence de pression entre chaque côté de l'hélice. Cette différence de pression conduit alors à la création d'un flux d'air pouvant traverser, à la fois, l'au moins un orifice de la cloche du moteur et l'au moins une ouverture du bol.

Le dispositif centrifuge est agencé pour orienter le flux d'air traversant le moteur électrique vers l'au moins un orifice de passage d'air ménagé dans la cloche, lorsque ce flux d'air traverse le moteur depuis l'extérieur de l'hélice vers l'intérieur, c'est-à-dire depuis l'extérieur du véhicule vers le compartiment moteur, ou bien pour orienter le flux d'air traversant le moteur électrique depuis l'ouverture de passage d'air ménagée dans le bol, lorsque ce flux d'air traverse le moteur depuis l'intérieur de l'hélice vers l'extérieur, c'est-à-dire depuis le compartiment moteur vers l'extérieur du véhicule.

Selon une première série de caractéristiques de l'invention, prises seules ou en combinaison, on pourra prévoir que :
- l'au moins une lame est en forme de spirale ;
- le dispositif centrifuge comporte une pluralité de lames qui sont régulièrement réparties angulairement autour de l'axe ;
- l'au moins une ouverture de passage du flux d'air est formée au centre du bol ;
- les lames du dispositif centrifuge sont en appui contre le bol ;
- le plateau comprend une partie bombée en son centre positionnée dans l'axe de l'au moins une ouverture de passage du flux d'air formée au centre du bol.

Dans un mode de réalisation non revendiqué, la lame du dispositif centrifuge est formée sur une face intérieure du bol, perpendiculaire à l'axe, de manière à s'étendre axialement en rapprochement de la face extérieure de la cloche. Notamment, les lames formées sur la première face du bol peuvent être en appui contre cette face extérieure de la cloche, la face extérieure de la cloche et les lames formant le dispositif centrifuge. La cloche peut comprendre une partie bombée réalisée indépendamment et rapportée au centre de la deuxième face et positionnée dans l'axe de l'au moins une ouverture de passage du flux d'air.

On peut notamment prévoir que l'au moins un orifice de la cloche est disposé en périphérie de celle-ci ; le flux d'air secondaire, dirigé radialement par le dispositif centrifuge après son arrivée via l'ouverture de passage d'air dans le bol, peut alors passer à travers l'au moins un orifice périphérique de la cloche pour pénétrer à l'intérieur de celle-ci et refroidir les composants du moteur électrique ; la cloche peut comporter une pluralité d'orifices, régulièrement répartis angulairement autour de l'axe.

Selon un mode de réalisation de l'invention, le bol de l'hélice peut comprendre sur son contour intérieur une partie d'extension annulaire s'étendant vers l'intérieur du bol et de forme en correspondance avec la cloche pour réaliser un ajustement radial serré entre le bol et la cloche. Et les orifices peuvent être situés dans une zone périphérique de la cloche comprise entre le bord intérieur de l'extension annulaire et le diamètre extérieur de la cloche.

Selon une autre série de caractéristiques d'une mode de réalisation non revendiquée, prises seules ou en combinaison, on pourra prévoir que :
- l'au moins une ouverture de passage du flux d'air est réalisée en périphérie du bol : le bol peut présenter une pluralité de ces ouvertures et ces ouvertures peuvent être régulièrement réparties angulairement autour de l'axe ;
- le dispositif centrifuge est disposé sur le bol de l'hélice, le plateau porteur de l'au moins une lame étant plaqué contre le bol de l'hélice, et le dispositif centrifuge peut être en appui par les lames contre la cloche ;
- l'au moins lame du dispositif centrifuge est issue de matière de la face intérieure du bol ;
- l'au moins une lame formée sur la face intérieure du bol est en appui contre la cloche pour former le dispositif centrifuge ;
- un déflecteur de forme annulaire est disposé entre la cloche et le bol, dans le prolongement d'une face extérieure de la cloche sur laquelle l'au moins une lame est en appui ;
- le déflecteur affleure par l'une de ses faces la deuxième face de la cloche ;
- la cloche comprend des orifices sur une face extérieure perpendiculaire à l'axe et en regard du bol ;
- les orifices formés dans la cloche sont régulièrement répartis angulairement autour de l'axe ;
- la cloche comprend des orifices en périphérie.

Selon une autre caractéristique de l'invention, le dispositif centrifuge et le bol comprennent respectivement des premiers et deuxièmes trous en correspondance et configurés pour permettre de loger des vis de fixation reçues dans des premiers trous de fixation de la cloche.

D'autres caractéristiques, détails et avantages de l'invention ressortiront plus clairement à la lecture de la description donnée ci-après à titre indicatif en relation avec des dessins dans lesquels :
- la figure 1 est une vue éclatée en perspective du dispositif de ventilation motorisé où l'on a représenté une hélice, un moteur équipé d'une cloche, et une enveloppe de support d'hélice ;
- la figure 2A est une vue en perspective d'un premier mode de réalisation du dispositif de ventilation selon l'invention représenté du côté avant de l'hélice et dans lequel en fonctionnement un flux d'air s'écoule depuis le côté avant de l'hélice vers un côté arrière de l'hélice par le bais d'une ouverture formée au centre du bol de l'hélice ;
- la figure 2B est une vue éclatée en perspective du premier mode de réalisation du dispositif de la figure 2A représenté du côté arrière de l'hélice et dans laquelle on a représenté l'hélice et le moteur électrique équipé d'une cloche et susceptible d'être logé dans le bol de l'hélice, le moteur étant ici équipé sur la face en regard de l'hélice d'un dispositif centrifuge dont on aperçoit partiellement deux pales ;
- la figure 3A est une vue en perspective de la cloche du moteur représentée à la figure 2 sans le dispositif centrifuge ;
- la figure 3B est une vue en perspective de face de la cloche du moteur représentée à la figure 2 et 3 équipé du dispositif centrifuge ;
- la figure 4 est une vue en coupe en perspective d'une section du dispositif de ventilation selon le premier mode de réalisation de l'invention, dans laquelle on a représenté le bol de l'hélice, le dispositif centrifuge et la cloche du moteur telle qu'assemblée dans le bol de l'hélice, et une représentation schématique du flux d'air traversant le dispositif ;
- la figure 5A est une vue en perspective d'une variante non revendiquée représenté du côté avant de l'hélice et dans laquelle le dispositif centrifuge, non visible sur cette figure 5A, est formé en partie à l'intérieur du bol de l'hélice ;
- la figure 5B est une vue éclatée en perspective de la variante du dispositif de la figure 5A représenté du côté arrière de l'hélice afin de rendre visible le dispositif centrifuge et dans laquelle on a représenté uniquement la cloche du moteur électrique pour faciliter la compréhension ;
- la figure 6 est une vue éclatée en perspective de la cloche du moteur représentée à la figure 5B et d'une partie bombée rapportée sur la cloche ;
- la figure 7 est une vue en coupe en perspective du dispositif de ventilation selon la variante non revendiquée dans laquelle on a représenté le bol de l'hélice, le dispositif centrifuge et la cloche du moteur telle qu'assemblée dans le bol de l'hélice, et une représentation schématique du flux d'air traversant le dispositif ;
- la figure 8A est une vue en perspective d'un deuxième mode de réalisation qui ne fait pas partie de l'invention représenté du côté avant de l'hélice et dans laquelle le dispositif centrifuge, non visible sur cette figure 8A, est formé en partie sur le bol de l'hélice ;
- la figure 8B est une vue éclatée en perspective du deuxième mode de réalisation du dispositif de la figure 8A représenté du côté arrière de l'hélice afin de rendre visible le dispositif centrifuge et dans laquelle on a représenté uniquement la cloche du moteur électrique pour faciliter la compréhension ;
- la figure 9 est une vue en perspective de la cloche du moteur représentée à la figure 8B ;
- la figure 10 est une vue en coupe en perspective du dispositif de ventilation selon le deuxième mode de réalisation dans laquelle on a représenté le bol de l'hélice, le dispositif centrifuge et la cloche du moteur telle qu'assemblée dans le bol de l'hélice et une représentation schématique du flux d'air traversant le dispositif.

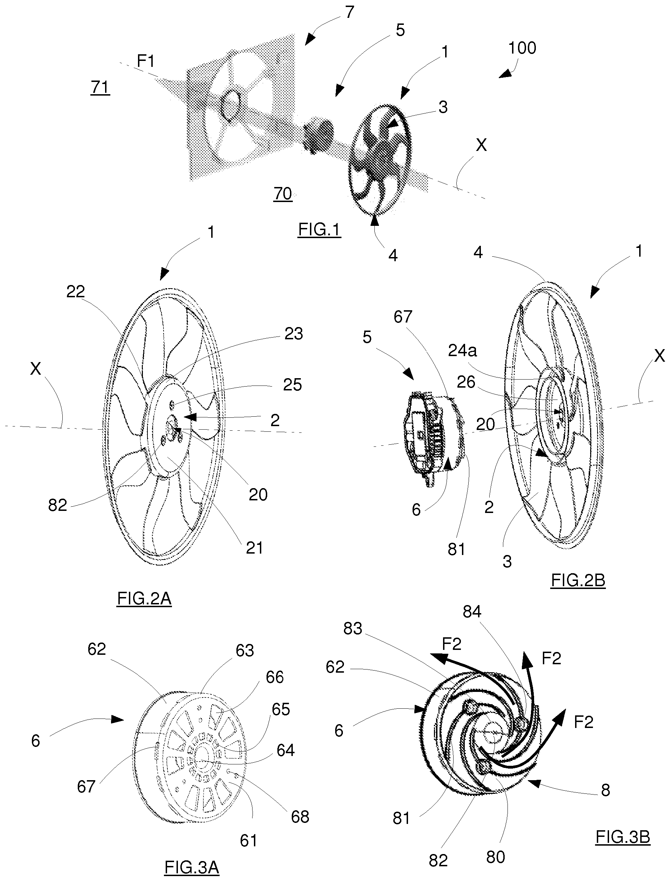

Sur la figure 1, on a illustré un dispositif de ventilation 100 du type de ceux disposés en partie avant d'un compartiment moteur, pour l'alimentation en air frais de ce compartiment moteur. Le dispositif de ventilation comporte notamment une hélice motorisée, de sorte que l'on peut commander la rotation de l'hélice et la vitesse de cette rotation en fonction des modes de fonctionnement du véhicule.

Le dispositif de ventilation 100 comporte une hélice 1 formée par un bol 2 et des pales 3 régulièrement disposées sur le bol 2 autour d'un axe X. Les pales 3 solidarisées au bol 2 s'étendant radialement par rapport à l'axe X vers l'extérieur à partir du bol 2 pour être en prise avec un anneau de maintien 4 participant à rigidifier les pales 3 entre elles. Un moteur électrique 5 équipé d'une cloche 6 est destiné à être logé au moins en partie dans le bol 2 de l'hélice 1, et c'est le pilotage du moteur électrique 5 qui permet la rotation, autour de l'axe X, du bol 2 et des pales 3 solidaires en rotation.

En pratique, le dispositif de ventilation motorisé est monté dans une enveloppe de support 7 délimitant un côté amont 70 et un côté aval 71 correspondant au sens de circulation du flux d'air principal F1 généré par le mouvement des pales 3 de l'hélice 1 en rotation autour de l'axe X et par une différence de pression entre le côté amont 70 et le côté aval 71. Ce flux d'air principal F1 est ainsi dirigé vers le compartiment moteur, correspondant au côté aval 71.

Dans ce qui suit, on va décrire un agencement particulier du bol et de la cloche pour la mise en oeuvre d'un flux d'air secondaire F2, participant à refroidir le moteur électrique 5. La disposition et l'orientation générale de l'hélice 1 telles que représentées sur la figure 1 correspondent aussi bien à un premier mode de réalisation de l'invention permettant un refroidissement de premier type, dit « front cooling » et décrit ci-après, ou bien à un deuxième mode de réalisation non revendiqué permettant un refroidissement de deuxième type, dit « back cooling » et décrit consécutivement au premier mode de réalisation.

Dans chacun de ces cas, on prévoit un dispositif centrifuge 8 agencé entre la cloche 6 et le bol 2, pour orienter radialement et accélérer le flux d'air secondaire F2, et ce dispositif centrifuge sera détaillé plus en détail ci-après en fonction des modes de réalisation évoqués ci-dessus.

Sur les figures 2 à 4, on a représenté le dispositif de ventilation motorisé selon le premier mode de réalisation correspondant au fonctionnement dit « front cooling » dans lequel un flux d'air secondaire F2 s'écoule depuis le côté amont 70 vers le côté aval 71, c'est-à-dire dans le même sens que le flux d'air principal F1, en passant au travers d'une ouverture 20 ménagée dans le centre du bol 2 de l'hélice 1.

Le bol 2 est formé par une paroi centrale 21 plane de forme circulaire et prolongée sensiblement perpendiculairement à sa périphérie par une paroi latérale 22, une paroi de jonction 23 étant ménagée entre cette paroi centrale 21 et cette paroi latérale 22. De la sorte, le bol 2 présente une forme concave vue du côté aval 71. Les pales 3 de l'hélice 1 s'étendent radialement depuis la paroi latérale 22.

La paroi centrale 21 du bol 2 comprend en son centre l'ouverture 20 de forme circulaire dont le centre se confond avec l'axe X.

Sur la figure 2B, on a représenté le moteur électrique 5 dans son orientation de montage tel qu'inséré dans le bol 2 de l'hélice 1. Le moteur électrique 5 est un moteur à aimants permanents et comprend un stator, un rotor et des composants électriques contenus dans la cloche 6 du moteur électrique 5.

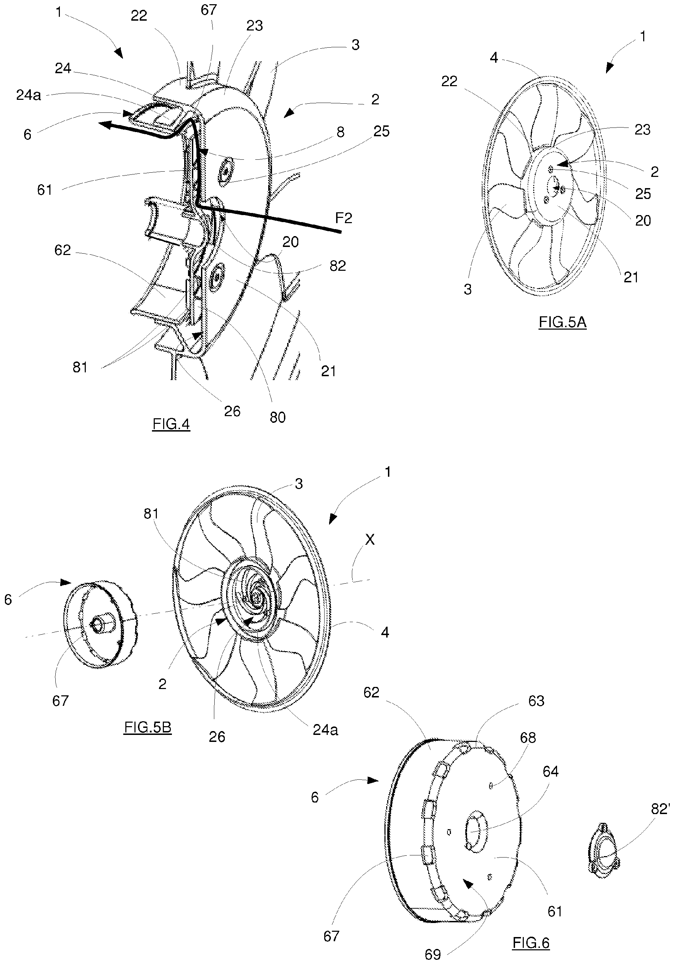

Tel que cela est visible sur la figure 4, la paroi latérale 22 du bol 2 de l'hélice 1 comprend sur sa face intérieure une partie d'extension 24 annulaire s'étendant radialement vers l'intérieur du bol 2 et comprenant à son extrémité libre un bord plié 24a configuré pour s'étendre axialement le long de l'axe X. Le bord plié 24a définit de la sorte un manchon annulaire de diamètre légèrement supérieur au diamètre de la cloche 6 du moteur électrique 5, de manière à ce que la cloche soit ajusté à l'intérieur de ce manchon.

Pour faciliter la compréhension de l'invention, le moteur électrique 5 est représenté uniquement par sa cloche 6 dans la suite de la description et des figures.

Sur la figure 3A en particulier, on a représenté la cloche 6 du moteur électrique 5 formée par une partie centrale 61 plane de forme circulaire prolongée sensiblement perpendiculairement par une partie latérale 62 par le biais d'une partie intermédiaire 63 de telle sorte que la cloche 6 présente une forme concave vue du côté aval 71.

La partie centrale 61 de la cloche 6 comprend en son centre une ouverture de passage 64 pour un arbre d'entraînement du moteur électrique 5. Des premiers et des deuxièmes orifices 65, 66 sont également ménagés sur la partie centrale 61 de la cloche 6 autour de cet ouverture de passage 64. Une première série de ces premiers orifices 65 est disposée immédiatement autour de l'ouverture de passage 64, et les deuxièmes orifices 66 sont agencés autour de cette première série de premiers orifices 65, entre ceux-ci et la partie intermédiaire 63.

Par ailleurs, la cloche 6 comprend des troisièmes orifices 67 formés à la jonction de la partie latérale 62 et de la partie intermédiaire 63. On peut distinguer de la sorte des orifices centraux de la cloche formés par les premiers et deuxièmes orifices et des orifices périphériques de la cloche formés par les troisièmes orifices 67.

Le dispositif centrifuge 8 est ici monté sur la cloche 6 du moteur électrique 5, tel que cela est visible sur la figure 3B. Le dispositif centrifuge 8 comprend un plateau 80 et des lames 81 formées en saillie d'une première face du plateau 80. Les lames 81 présentent une forme de spirale identique d'une lame à l'autre et elles sont régulièrement réparties angulairement autour de l'axe X. Les lames 81 s'étendent en spirale depuis une zone centrale 83 circulaire agencée au centre du plateau 80 et présentant une forme et des dimensions identiques à celles de l'ouverture 20 ménagée dans le bol 2 de l'hélice 1.

On notera que dans ce premier mode de réalisation le dispositif centrifuge 8 est plaqué contre la partie centrale 61 de la cloche 6 de sorte à obturer les premiers et deuxièmes orifices 65, 66 formant les orifices centraux ménagés dans cette cloche 6. La deuxième face du plateau 80, c'est-à-dire celle opposée à la face portant les lames 81, est plaquée contre la partie centrale de la cloche. Tel que cela est visible sur la figure 3B notamment, le plateau 80 du dispositif centrifuge 8 est dimensionné de manière à ne pas obstruer les troisièmes orifices 67 ménagés à la jonction de la partie intermédiaire 63 et de la partie latérale 62. C'est la disposition des troisièmes orifices 67 sur la périphérie de la cloche et la forme plane du plateau 80 du dispositif centrifuge qui permet le dégagement des troisièmes orifices et la circulation possible d'un flux d'air au travers de ceux-ci alors que le dispositif centrifuge est en place contre la cloche.

En particulier sur les figures 3B et 4, on peut voir que le plateau 80 du dispositif centrifuge 8 comprend une partie bombée 82 délimitée par la zone centrale 83.

Sur la figure 4, on a représenté une vue en coupe en perspective d'une section de l'hélice 1 comprenant le bol 2 à l'intérieur duquel est logé la cloche 6 du moteur électrique 5 sur laquelle est appliqué le dispositif centrifuge 8. Dans cette configuration du premier mode de réalisation, le dispositif centrifuge 8 est en appui par les lames 81 contre la face intérieure 26 de la paroi centrale 21 du bol 2. La cloche 6, le dispositif centrifuge 8 et le bol de l'hélice 2 sont alors empilés dans cet ordre le long de l'axe X et ces composants sont centrés sur cet axe X formant un axe commun du dispositif. La partie bombée 82 du plateau 80 du dispositif centrifuge 8 est alors face à l'ouverture 20 du bol 2.

La position l'un par rapport à l'autre de la cloche 6, du dispositif centrifuge 8 et du bol de l'hélice est assurée par des moyens de vissage traversant et enserrant le dispositif centrifuge entre la cloche et le bol. Pour réaliser cette fixation, des premiers trous de fixation 68 sont formés dans la partie centrale 61 de la cloche 6 du moteur électrique 5, et le dispositif centrifuge 8 et le bol 2 comprennent respectivement des premiers et deuxièmes alésages 84, 25 en correspondance et configurés pour permettre de loger des vis de fixation reçues dans les premiers trous de fixation 68 de la cloche 6.

Lorsque la cloche 6 est logée dans le bol 2 de l'hélice 1, la partie d'extension 24 de la paroi latérale 22 du bol 2 de l'hélice 1 vient en prise par son bord plié 24a contre la partie latérale 62 du bol 2 de l'hélice 1 pour former un ajustement serré entre le bol 2 et la cloche 6.

Tel que cela est notamment visible sur la figure 4, la partie intermédiaire 63 de la cloche 6 est en regard de la paroi de jonction 23 du bol 2 de sorte que les troisièmes orifices 67 disposés au niveau de la partie intermédiaire 63 de la cloche 6 ne sont pas obstrués par la partie d'extension 24 de la paroi latérale 22 du bol 2.

On va maintenant décrire le fonctionnement du dispositif de ventilation selon le premier mode de réalisation.

En fonctionnement, le moteur électrique 5 entraîne en rotation l'hélice 1 et forme le flux d'air principal F1. La rotation du moteur électrique 5 entraîne également la rotation du dispositif centrifuge 8 agencée entre la cloche 6 et le bol de l'hélice 2. Cette rotation du dispositif centrifuge 8 permet alors de générer un flux d'air secondaire F2 pénétrant dans le dispositif de refroidissement selon l'invention par l'intermédiaire de l'ouverture 20 du bol 2 de l'hélice 1. Le flux d'air secondaire F2 est alors dévié radialement par la partie bombée 82 vers les lames 81, à l'intérieur de ce bol.

Le flux d'air secondaire F2 est ensuite accéléré et guidé radialement vers la périphérie du bol par le mouvement de rotation du dispositif centrifuge 8. Tel que représenté à la figure 4, le flux d'air secondaire F2 s'écoule, depuis l'ouverture 20 ménagée au centre du bol 2, sur le long du plateau 80 du dispositif centrifuge, entre les lames 81 dont la forme en spirale facilite l'éjection d'air vers la périphérie du bol.

En référence à la figure 4, le flux d'air secondaire F2 représenté schématiquement pour faciliter la compréhension est alors guidé par les lames 81 vers la périphérie du bol et plus particulièrement vers la paroi de jonction 23 de celui-ci. L'air projeté contre cette paroi de jonction tend à revenir vers la cloche du moteur en courant le long de la partie d'extension 24 de la paroi latérale 22 du bol, et le flux d'air secondaire traverse alors la cloche 6 du moteur électrique 5 par l'intermédiaire des troisièmes orifices 67 ménagés dans la partie intermédiaire 63. Le flux d'air secondaire F2 refroidit alors le moteur électrique 5 et notamment ses composants électroniques.

Dans les figures 5 à 7, on a représenté une variante non revendiquée, qui diffère ce qui a été précédemment décrit en ce que le dispositif centrifuge n'est pas plaqué contre la cloche du moteur. Les lames 81 du dispositif centrifuge 8 sont ici formées issues de matière de la paroi centrale 21 du bol 2, en s'étendant en saillie vers la cloche depuis la face intérieure 26 de cette paroi centrale. De façon similaire ou équivalente à ce qui précède, les lames 81 s'étendent radialement depuis l'ouverture 20 du bol 2 vers la périphérie du bol.

Pour guider radialement le flux d'air secondaire F2 le long la cloche et le long du bol, entre les spirales formées par les lames, on prévoit de remplacer le plateau 80 du premier mode de réalisation par une cloche 6 dont la partie centrale 61 présente une face extérieure 69 pleine, c'est-à-dire qui ne comprend pas les premières et deuxièmes orifices 65, 66 tels qu'illustrés dans le premier mode de réalisation. La partie centrale 61 de la cloche 6 peut alors être utilisée pour guider radialement le flux d'air secondaire F2. On comprend que, conformément à ce qui précède, la cloche est fixée à l'intérieur du bol de l'hélice par des moyens de vissage appropriés, et cette fixation génère le plaquage de la partie centrale 61 de la cloche 6 contre les lames 81 formées sur la paroi centrale 21 du bol 2.

Dans cette variante, le dispositif centrifuge est alors formé par la partie centrale 61 de la cloche 6 en appui contre les lames 81.

Telle que représentée sur la figure 6, la variante de réalisation diffère en outre en ce que, étant donné que la partie bombée servant à déviation de l'air passant par l'ouverture de passage 20 dans le bol ne peut plus être porté par une plaque du dispositif centrifuge, la cloche 6 est configurée pour recevoir en son centre une partie bombée 82', qui dans l'exemple illustré sur la figure 6 est rapportée par vissage sur la partie centrale 61 de la cloche 6.

Lorsque la cloche 6 est montée dans le bol 2, la partie bombée 82' est alors face à l'ouverture 20 du bol 2. En fonctionnement, le principe est identique à celui décrit pour le premier mode de réalisation, à la différence que le flux d'air secondaire F2 s'écoule sur la face extérieure 69 de la paroi centrale 61 de la cloche 6.

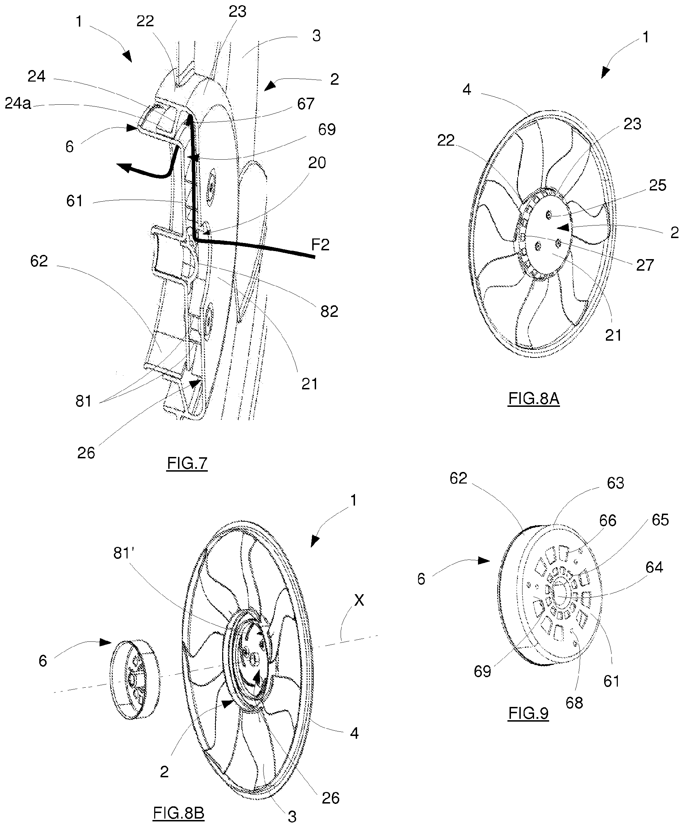

Sur les figures 8 à 10, on a représenté le dispositif de ventilation motorisé selon le deuxième mode de réalisation, qui ne fait pas partie de l'invention, correspondant au fonctionnement dit « back cooling »
dans lequel le flux d'air secondaire F2 s'écoule depuis le côté aval 71 vers le côté amont 70, c'est-à-dire en sens opposé à celui du flux d'air principal F1, en passant au travers d'ouvertures 27 ménagées en périphérie du bol 2 de l'hélice 1.

Dans ce mode de réalisation, la paroi centrale 21 du bol 2 est fermée en son centre alors que la paroi de jonction 23 comprend les ouvertures périphériques 27, qui sont régulièrement réparties angulairement autour de l'axe X.

Telles que représentées à la figure 8B, des lames 81' sont formées sur la face intérieure 26 de paroi centrale 21 du bol 2, issues de matière avec le bol. Les lames 81' sont de forme courbée, dans une disposition en spirale similaire à ce qui a été précédemment décrit, et elles sont là encore régulièrement réparties angulairement autour de l'axe X.

La cloche 6 doit, dans ce mode de réalisation, comprendre sur sa partie centrale 61 les premiers et deuxièmes orifices 65, 66 tels que décrits dans le premier mode de réalisation. Dans l'exemple illustré sur la figure 9, la partie intermédiaire 63 est pleine et ne comporte pas d'orifices de passage d'air en comparaison de ceux réalisé dans la cloche du premier mode de réalisation. Toutefois, tel que cela sera notamment expliqué plus en détails ci-après dans la description du dispositif assemblé, la cloche 6 utilisée dans ce deuxième mode de réalisation pourrait être exactement celle utilisée dans le premier mode de réalisation et illustrée sur la figure 3A, c'est à dire avec des orifices périphériques, l'essentiel dans ce deuxième mode de réalisation étant la présence des premiers et deuxièmes orifices sur la partie centrale 61 pour un passage d'air sensiblement parallèle à l'axe X depuis l'intérieur du moteur vers l'extérieur de celui-ci, en direction du bol.

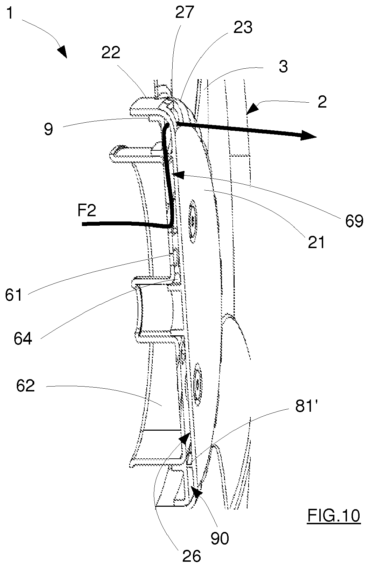

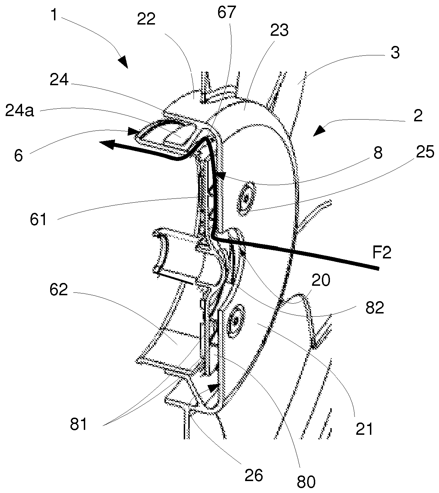

Sur la figure 10, on a représenté une vue en coupe en perspective d'une section de l'hélice 1 comprenant le bol 2 à l'intérieur duquel est logé la cloche 6 du moteur électrique 5 et avec le dispositif centrifuge 8 disposé entre la cloche et le bol. Dans cette configuration du deuxième mode de réalisation, le dispositif centrifuge 8 est en appui par les lames 81' contre la face extérieure 69 de la partie centrale de la cloche 6. La cloche 6, le dispositif centrifuge 8 et le bol de l'hélice 2 sont alors empilés dans cet ordre le long de l'axe X et ces composants sont centrés sur cet axe X formant un axe commun du dispositif. Dans ce deuxième mode de réalisation, la cloche ne comporte pas de partie bombée centrale puisque le bol ne présente pas d'ouverture central de passage d'air.

Par ailleurs, un déflecteur 9 de forme annulaire est disposé entre la cloche 6 et le bol 2 pour être en appui, à la fois, contre la paroi latérale 22 du bol 2 et contre la partie latérale 62 de la cloche 6. Le déflecteur 9 est positionné de sorte à venir affleurer par l'une de ses faces 90 la face extérieure 69 de la partie centrale 61 de la cloche 6, et prolonger radialement la cloche jusqu'au bol. La forme du déflecteur 9 est telle qu'il viendrait en recouvrement des troisièmes orifices si la cloche en était munie.

On comprendra que dans ce deuxième mode de réalisation, le dispositif centrifuge est formé par les lames 81' et la paroi centrale 21 du bol 2.

En fonctionnement, la rotation du moteur génère un flux d'air secondaire F2 s'écoulant depuis le côté aval 71 vers le côté amont 70, ce flux d'air secondaire F2 traversant alors le moteur pour le refroidir en étant dirigé à travers les premiers et deuxièmes orifices 65, 66 ménagés dans la partie centrale de la cloche. Le flux d'air secondaire F2 pénètre dans le bol 2 de l'hélice jusqu'à rencontrer la face intérieure 26 de la paroi centrale 21 du bol 2. Le flux d'air secondaire F2 est accéléré par le mouvement centrifuge créé par la rotation des lames 81', et il s'écoule le long de la face intérieure 26 de la paroi centrale 21 du bol 2 pour être guidé, en particulier par le déflecteur 9, en périphérie du bol 2 et s'écouler en dehors de l'hélice en passant notamment par les ouvertures périphériques 27.

Bien entendu, l'invention n'est pas limitée aux modes de réalisation décrits et représentés aux dessins annexés. En particulier, on peut prévoir, dans une liste de variante non exhaustive :
- une cloche d'un moteur électrique comprenant des orifices périphériques formés exclusivement sur la partie latérale de la cloche et non partiellement sur la partie intermédiaire ;
- une partie d'extension de la paroi latérale du bol qui est configurée pour assurer la déflection en lieu et place de la pièce rapportée formant le déflecteur.

D'autres modifications restent possibles, notamment du point de vue de la constitution des divers éléments ou par substitution d'équivalents techniques, sans sortir pour autant du domaine de protection de l'invention, dès lors que le bol de l'hélice et la cloche du moteur comportent respectivement une ou plusieurs ouvertures permettant l'entrée ou la sortie d'air selon le mode de refroidissement secondaire mis en oeuvre, dans un contexte de dispositif centrifuge disposé entre une cloche de moteur électrique et un bol d'hélice motorisé.

## Revendications

1. Dispositif de ventilation motorisé pour véhicule automobile comprenant une hélice (1) mobile en rotation autour d'un axe (X) et formée par un bol (2) sur lequel sont disposées des pales (3), une cloche (6) d'un moteur électrique (5) logée en partie à l'intérieur du bol (2), un dispositif centrifuge (8) disposé entre le bol (2) et la cloche (6) et configuré pour guider et accélérer un flux d'air (F2), le bol (2) comprenant au moins une ouverture (20) de passage du flux d'air (F2) et la cloche (6) comprenant au moins un orifice (65, 66, 67) de passage du flux d'air (F2), ledit dispositif centrifuge (8) comprenant au moins une lame (81, 81') s'étendant axialement entre le bol et la cloche **caractérise en ce que** le dispositif centrifuge (8) comporte un plateau (80) de support de l'au moins une lame (81, 81'), ledit plateau étant plaqué contre la cloche (6) et l'au moins une lame s'étendant en saillie du plateau en direction du bol (2) de l'hélice (1).

2. Dispositif de ventilation selon la revendication 1, **caractérisé en ce que** l'au moins une ouverture (20) de passage du flux d'air (F2) est formée au centre du bol (2).

3. Dispositif de ventilation selon la revendication 2, **caractérisé en ce que** le plateau (80) comprend une partie bombée (82) en son centre positionnée en correspondance de l'au moins une ouverture (20) de passage du flux d'air (F2) formée au centre du bol (2).

4. Dispositif de ventilation selon l'une des revendications 2 ou 3, **caractérisé en ce que** l'au moins un orifice (67) de la cloche (6) est disposé en périphérie de cette cloche.

5. Dispositif de ventilation selon l'une quelconque des revendications précédentes, **caractérisé en ce que** le bol (2) de l'hélice (1) comprend sur son contour intérieur une partie d'extension (24) annulaire s'étendant vers l'intérieur du bol (2) et de forme en correspondance avec la cloche (6) pour réaliser un ajustement radial serré entre le bol (2) et la cloche (6).

6. Dispositif de ventilation selon l'une quelconque des revendications précédentes, **caractérisé en ce que** le dispositif centrifuge (8) et le bol (2) comprennent respectivement des premiers et deuxièmes alésages (84, 25) en correspondance et configurés pour permettre de loger des vis de fixation reçues dans des premiers trous de fixation (68) de la cloche (6).

## Patentansprüche

1. Motorisierte Lüftungsvorrichtung für ein Kraftfahrzeug, umfassend ein Lüfterrad (1), das um eine Achse (X) drehbar ist und durch eine Schale (2) gebildet ist, an der Flügel (3) angeordnet sind, eine Glocke (6) eines Elektromotors (5), die teilweise innerhalb der Schale (2) angeordnet ist, eine Zentrifugalvorrichtung (8), die zwischen der Schale (2) und der Glocke (6) angeordnet und dazu ausgelegt ist, einen Luftstrom (F2) zu führen und zu beschleunigen, wobei die Schale (2) mindestens eine Öffnung (20) für den Durchgang des Luftstroms (F2) umfasst und die Glocke (6) mindestens eine Öffnung (65, 66, 67) für den Durchgang des Luftstroms (F2) umfasst, wobei die Zentrifugalvorrichtung (8) mindestens eine Klinge (81, 81') umfasst, die sich axial zwischen der Schale und der Glocke erstreckt,
**dadurch gekennzeichnet, dass** die Zentrifugalvorrichtung (8) eine Platte (80) zum Tragen der mindestens einen Klinge (81, 81') aufweist, wobei die Platte an der Glocke (6) anliegt und die mindestens eine Klinge sich von der Platte vorstehend in Richtung der Schale (2) des Lüfterrads (1) erstreckt.

2. Lüftungsvorrichtung nach Anspruch 1, **dadurch gekennzeichnet, dass** die mindestens eine Öffnung (20) für den Durchgang des Luftstroms (F2) in der Mitte der Schale (2) ausgebildet ist.

3. Lüftungsvorrichtung nach Anspruch 2, **dadurch gekennzeichnet, dass** die Platte (80) einen in ihrer Mitte gewölbten Teil (82) umfasst, der entsprechend der mindestens einen Öffnung (20) für den Durchgang des Luftstroms (F2), die in der Mitte der Schale (2) ausgebildet ist, angeordnet ist.

4. Lüftungsvorrichtung nach einem der Ansprüche 2 oder 3, **dadurch gekennzeichnet, dass** die mindestens eine Öffnung (67) der Glocke (6) am Umfang dieser Glocke angeordnet ist.

5. Lüftungsvorrichtung nach einem der vorangehenden Ansprüche, **dadurch gekennzeichnet, dass** die Schale (2) des Lüfterrads (1) an ihrer Innenkontur einen ringförmigen Verlängerungsabschnitt (24) umfasst, der sich in das Innere der Schale (2) erstreckt und dessen Form der Glocke (6) entspricht, um einen radialen Presssitz zwischen der Schale (2) und der Glocke (6) herzustellen.

6. Lüftungsvorrichtung nach einem der vorangehenden Ansprüche, **dadurch gekennzeichnet, dass** die Zentrifugalvorrichtung (8) und die Schale (2) jeweils erste und zweite Bohrungen (84, 25) umfassen, die einander entsprechen und dazu ausgelegt sind, die Aufnahme von Befestigungsschrauben zu ermöglichen, die in ersten Befestigungslöchern (68) der Glocke (6) aufgenommen werden.

## Claims

1. Motorized ventilation device for a motor vehicle, comprising an impeller (1) free to rotate about an axis (X) and formed by a cup (2), on which blades (3) are disposed, a bell cap (6) of an electric motor (5) partly housed inside the cup (2), a centrifugal device (8) disposed between the cup (2) and the bell cap (6) and configured to guide and to accelerate an air flow (F2), the cup (2) comprising at least one opening (20) for the passage of the air flow (F2) and the bell cap (6) comprising at least one orifice (65, 66, 67) for the passage of the air flow (F2), said centrifugal device (8) comprising at least one vane (81, 81') axially extending between the cup and the bell cap, **characterized in that** the centrifugal device (8) comprises a plate (80) for supporting the at least one vane (81, 81'), said plate being pressed against the bell cap (6) and the at least one vane extending by projecting from the plate toward the cup (2) of the impeller (1) .

2. Ventilation device according to Claim 1, **characterized in that** the at least one opening (20) for the passage of the air flow (F2) is formed at the center of the cup (2).

3. Ventilation device according to Claim 2, **characterized in that** the plate (80) comprises a domed part (82) at the center thereof, positioned so as to match the at least one opening (20) for the passage of the air flow (F2) formed at the center of the cup (2).

4. Ventilation device according to one of Claims 2 or 3, **characterized in that** the at least one orifice (67) of the bell cap (6) is disposed on the periphery of said bell cap.

5. Ventilation device according to any one of the preceding claims, **characterized in that** the cup (2) of the impeller (1) comprises, on its internal profile, an annular extension part (24) extending toward the inside of the cup (2) and shaped so as to match the bell cap (6) in order to enable a radial interference fit between the cup (2) and the bell cap (6).

6. Ventilation device according to any one of the preceding claims, **characterized in that** the centrifugal device (8) and the cup (2) respectively comprise first and second bores (84, 25) that are matching and are configured to allow fixing screws to be housed that are received in first fixing holes (68) of the bell cap (6).
